# EUROPÄISCHE PATENTANMELDUNG

(11) **EP 2 218 572 A2**
(43) Veröffentlichungstag der Anmeldung: **18.08.2010**
(21) Anmeldenummer: 10153257.0
(22) Anmeldetag: 11.02.2010
(51) Int. Cl.: B29C 67/00, H04R 25/00

(54) **Verfahren zur Herstellung eines Hörgeräts mit indirekter Laserbestrahlung**

(30) Priorität: 17.02.2009 DE 102009009273
(71) Anmelder: Siemens Medical Instruments Pte. Ltd., Singapore 139959 (SG)
(72) Erfinder: Chua, Tze Peng, 510139 Singapore (SG); Klemenz, Harald, 90766 Fürth (DE); Lim, Eng Cheong, 120408 Singapore (SG); Lim, Pei Chyi Kristy, 600307 Singapore (SG); Ma, Nisha Shakila, 520929 Singapore (SG); Jorgas, Matthias, 90469 Nürnberg (DE)
(74) Vertreter: Maier, Daniel Oliver

(57) **Zusammenfassung**

Die Herstellung von Hörgerätebauteilen, die zum Teil mit einem Rapid-Prototyping-Verfahren hergestellt werden, soll weiter automatisiert werden können. Hierzu wird im Rahmen eines Rapid-Prototyping-Verfahrens ein Laserstrahl (12) für ein Aushärten eines Werkstoffs durch einen Laser erzeugt und ein Werkstückträger (14), der durch den Laser (11) direkt bestrahlbar ist, bereitgestellt. Darüber hinaus wird der Laserstrahl (12) umgelenkt, so dass der Werkstückträger (14) mit dem Laser (11) auch indirekt bestrahlbar ist. Dadurch kann leichter auch in Hinterschneidungen von Werkstückrohlingen (13), die die Basis für die Hörgerätebauteile bilden, Material aufgebracht werden.

## Beschreibung

Die vorliegende Erfindung betrifft ein Rapid-Prototyping-Verfahren zum Herstellen eines Bauelements eines Hörgeräts durch Erzeugen eines Laserstrahls, Bereitstellen eines Werkstückträgers, der durch den Laserstrahl aus einem vorgegebenen Raumwinkelbereich direkt bestrahlbar ist, und Aushärten eines Werkstoffs auf dem Werkstückträger mit dem Laserstrahl.

Hörgeräte sind tragbare Hörvorrichtungen, die zur Versorgung von Schwerhörenden dienen. Um den zahlreichen individuellen Bedürfnissen entgegenzukommen, werden unterschiedliche Bauformen von Hörgeräten wie Hinter-dem-Ohr-Hörgeräte (HdO), Hörgerät mit externem Hörer (RIC: receiver in the canal) und In-dem-Ohr-Hörgeräte (IdO), z.B. auch Concha-Hörgeräte oder Kanal-Hörgeräte (ITE, CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

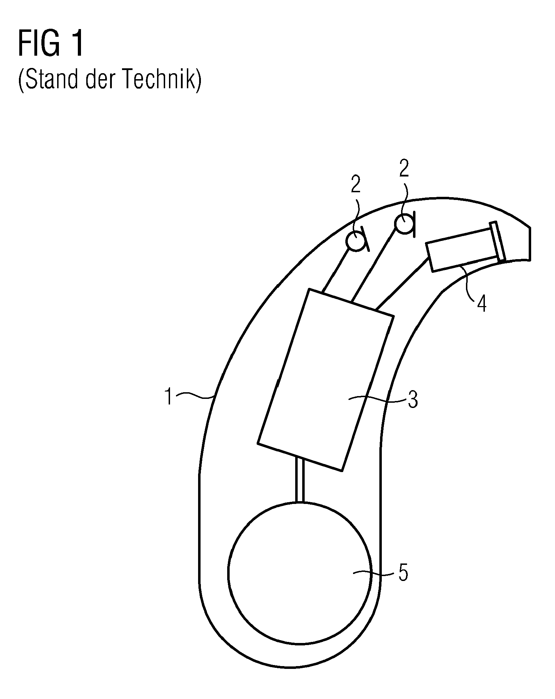

Hörgeräte besitzen prinzipiell als wesentliche Komponenten einen Eingangswandler, einen Verstärker und einen Ausgangswandler. Der Eingangswandler ist in der Regel ein Schallempfänger, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinheit integriert. Dieser prinzipielle Aufbau ist in FIG 1 am Beispiel eines Hinter-dem-Ohr-Hörgeräts dargestellt. In ein Hörgerätegehäuse 1 zum Tragen hinter dem Ohr sind ein oder mehrere Mikrofone 2 zur Aufnahme des Schalls aus der Umgebung eingebaut. Eine Signalverarbeitungseinheit 3, die ebenfalls in das Hörgerätegehäuse 1 integriert ist, verarbeitet die Mikrofonsignale und verstärkt sie. Das Ausgangssignal der Signalverarbeitungseinheit 3 wird an einen Lautsprecher bzw. Hörer 4 übertragen, der ein akustisches Signal ausgibt. Der Schall wird gegebenenfalls über einen Schallschlauch, der mit einer Otoplastik im Gehörgang fixiert ist, zum Trommelfell des Geräteträgers übertragen. Die Energieversorgung des Hörgeräts und insbesondere die der Signalverarbeitungseinheit 3 erfolgt durch eine ebenfalls ins Hörgerätegehäuse 1 integrierte Batterie 5.

Unter dem Begriff "Rapid-Prototyping" (schneller Prototypaufbau) versteht man ein Verfahren zum schnellen Herstellen von Musterbauteilen ausgehend von Konstruktionsdaten. Insbesondere kann dabei auf den Einsatz aufwändig herzustellender Formen wie etwa beim Spritzguss verzichtet werden. Typische Rapid-Prototyping-Verfahren sind die Stereolithografie (STL oder SLA) und das selektive Lasersintern (SLS).

Die Stereolithografie ist ein Verfahren, bei dem ein Werkstück durch materialisierende Punkte schichtweise aufgebaut wird. Die Fertigung eines Teils oder mehrerer Teile erfolgt typischerweise vollautomatisch aus am Computer erstellten CAD-Daten. Dabei wird ein lichtaushärtender Kunststoff, z. B. Epoxidharz, von einem Laser in dünnen Schichten ausgehärtet.

Das selektive Lasersintern hingegen ist ein Verfahren, bei dem räumliche Strukturen durch Sintern aus einem pulverförmigen Ausgangsstoff hergestellt werden. Es handelt sich ebenfalls um ein generatives Schichtbauverfahren. Durch die Wirkung der Laserstrahlen können so beliebige dreidimensionale Geometrien auch mit Hinterschneidungen erzeugt werden, die sich beispielsweise mit konventioneller Gusstechnik nicht herstellen lassen. Als Werkstoffe werden insbesondere Thermoplaste wie beispielsweise Polycarbonate, Polyamide, Polyvinylchlorid aber auch Metalle verwendet.

Rapid-Prototyping-Verfahren werden bei Hörgeräten insbesondere zur Fertigung von IdO-Hörgeräteschalen verwendet. Jede individuell angefertigte IdO-Hörgeräteschale ist ein Unikat und lässt sich nicht in einem Spritzgussverfahren wirtschaftlich herstellen. Das Rapid-Prototyping-Verfahren ist daher geeignet, aus den individuellen Gehörgangsdaten unmittelbar eine entsprechende Hörgeräteschale zu fertigen. Es können aber auch andere Bauteile eines Hörgeräts wie beispielsweise Rahmen, Tragehaken und sonstige Kunststoffkleinteile mit einem Rapid-Prototyping-Verfahren kostengünstig hergestellt werden, wenn keine Großserien bereitgestellt werden müssen.

Falls ein Werkstückrohling bereits vor dem Materialaufbau mit einem Rapid-Prototyping-Verfahren eine Komponente trägt, unter der sich - bezogen auf die Bestrahlung mit dem Laser - ein hohler Raum befindet, in welchen der Laser nicht direkt eindringen kann, so kann in diesem Hohlraum durch das Rapid-Prototyping-Verfahren kein Material aufgebaut werden. In solchen Fällen ist es notwendig, dass der Werkstückrohling zunächst ohne diese Komponente bereitgestellt wird, anschließend das Material mit dem Rapid-Prototyping-Verfahren aufgebaut wird und schließlich die Komponente - in der Regel manuell - auf das endgültige Rapid-Prototyping-Werkstück aufgebracht wird. Dadurch muss unter Umständen auf einen automatischen Bestückungsprozess bzw. -schritt verzichtet werden, mit dem sonst die Komponente auf das Werkstück bzw. dem Werkstückrohling aufgebracht wird.

Die Aufgabe der vorliegenden Erfindung besteht somit darin, die Herstellung von Hörgeräten, bei der ein Rapid-Prototyping-Verfahren Teil des Herstellungsprozesses ist, weiter automatisieren zu können.

Hierzu wird erfindungsgemäß bereitgestellt ein Rapid-Prototyping-Verfahren zum Herstellen eines Bauteils eines Hörgeräts durch
- Erzeugen eines Laserstrahls mit einem Laser,
- Bereitstellen eines Werkstückträgers, der durch den Laserstrahl direkt bestrahlbar ist, und
- Aushärten eines Werkstoffs auf dem Werkstückträger mit dem Laserstrahl,
   sowie
- Umlenken eines Laserstrahls, so dass der Werkstückträger mit dem Laser indirekt bestrahlt wird.

In vorteilhafter Weise ist es so möglich, beispielsweise einen automatisch hergestellten Werkstückrohling mit Hinterschneidungen auch nachträglich einem Rapid-Prototyping-Verfahren zu unterziehen, bei dem in der Hinterschneidung Material aufgebaut wird. Dies kann dadurch erreicht werden, dass der Laserstrahl auch indirekt über die Optikeinrichtung zu dem Werkstück gelenkt wird.

Vorzugsweise umfasst die Optikeinrichtung einen Spiegel. Mit einem Spiegel lässt sich ein Laserstrahl stark umlenken, so dass auch entlegene Hohlräume eines Werkstückrohlings durch den Laserstrahl erreicht werden können.

In einer speziellen Ausführungsform ist das Rapid-Prototyping-Verfahren ein Stereolithografieverfahren. Damit lässt sich ein Hörgerätebauteil durch Laserhärten aus einem flüssigen Duromer herstellen.

Alternativ kann das Rapid-Prototyping-Verfahren auch ein selektives Lasersintern sein. In diesem Fall lässt sich das Hörgerätebauteil beispielsweise aus Thermoplasten oder aus einem Metall herstellen.

Gemäß einer weiteren Ausführungsform kann der Werkstückträger einen Werkstückrohling mit einer Komponente tragen, unter der sich (bezogen auf den Laser) ein Hohlraum befindet, in dem durch indirekte Bestrahlung mit dem Laser Material durch Aushärten des Werkstoffs aufgebaut wird. Damit kann die Möglichkeit eingeräumt werden, den Werkstückrohling ohne das später durch das Rapid-Prototyping-Verfahren aufgebaute Material zunächst automatisch mit der Komponente zu bestücken. Die Komponente muss also nicht nach dem Rapid-Prototyping-Verfahren von Hand aufgebracht werden, wenn dies vorab automatisch geschehen kann. So können Standardbauteile weiter automatisch vervollständigt werden, bevor sie einer Individualisierung durch das Rapid-Prototyping unterzogen werden.

Die vorliegende Erfindung wird anhand der beigefügten Zeichnungen näher erläutert, in denen zeigen:
- FIG 1: eine Prinzipskizze eines Hörgeräts gemäß dem Stand der Technik und
- FIG 2: eine Prinzipskizze zum erfindungsgemäßen Rapid-Prototyping-Verfahren.

Die nachfolgend näher geschilderten Ausführungsbeispiele stellen bevorzugte Ausführungsformen der vorliegenden Erfindung dar.

Das nachfolgende Ausführungsbeispiel bezieht sich wie die gesamte Erfindung auf ein Rapid-Prototyping-Verfahren, bei dem zur Fertigung eines Hörgerätebauteils ein Laser zum Aushärten bzw. Auftragen von Material verwendet wird. Insbesondere soll auch auf einen Werkstückrohling, der Hinterschneidungen besitzt, individuell in einem raschen Prozess Material aufgetragen werden können.

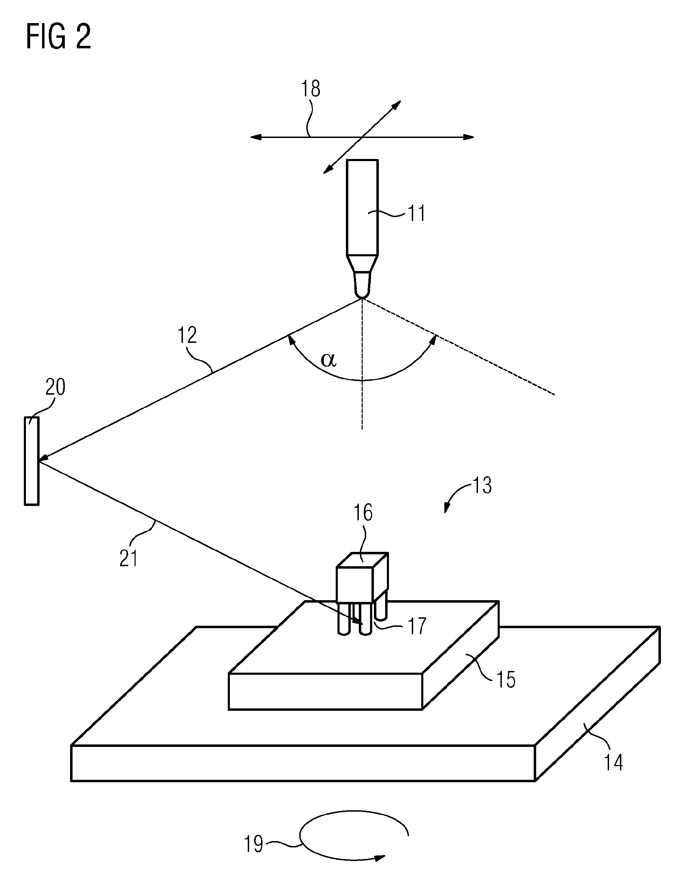

Eine hierzu geeignete Rapid-Prototyping-Vorrichtung ist in FIG 2 schematisch dargestellt. Es sind lediglich die wesentlichen Komponenten wiedergegeben. Diese sind zunächst ein Laser 11, der zum Erzeugen eines Laserstrahls 12 dient. Bestrahlt werden soll ein Werkstückrohling 13, der sich auf einem Werkstückträger 14 befindet. Der Werkstückrohling 13, der die Basis für das Hörgerätebauteil bildet, ist hier durch eine Platte 15 und eine darauf montierte Komponente 16 symbolisiert. Bezogen auf die "Blickrichtung" des Lasers 11 befindet sich unterhalb der Komponente 16 ein Hohlraum 17, da die Komponente 16 hier auf Stützen auf die Platte 15 montiert ist.

Bei einigen Rapid-Prototyping-Geräten ist der Laser in einer Ebene oberhalb des Werkstückträgers 14 in gewissen Grenzen gemäß den Pfeilen 18 relativ zu dem zu fertigenden Hörgerätebauteil bzw. Werkstückträger 14 verschiebbar. Ferner ist der Laser oft in einem vorgegebenen räumlichen Winkelbereich (hier symbolisiert durch den Winkel α) schwenkbar. Außerdem lässt sich gegebenenfalls auch der Werkstückträger 14 um seine Achse gemäß Pfeil 19 drehen. Mit diesen Freiheitsgraden des Lasers 11 relativ zu dem Hörgerätebauteil bzw. Werkstückträger 14 können hier aber nicht die Hinterschneidungen des Werkstückrohlings 13 durch ein Rapid-Prototyping-Verfahren mit Material gefüllt werden. Es würden hier also Hinterschneidungen vorliegen, die stets im Schattenbereich des Lasers 11 liegen.

Erfindungsgemäß ist daher vorgesehen, den Laserstrahl 12 mit Hilfe eines Spiegels 20 umzulenken und das zu fertigende Hörgerätebauteil bzw. den Werkstückrohling 13 so indirekt mit dem Laserlicht zu bestrahlen. Es ist ohne Weiteres zu erkennen, dass der umgelenkte Laserstrahl 21 sehr viel weiter unter die Komponente 16 eindringen kann als der direkte Laserstrahl 12, der unmittelbar von dem in seinen Bewegungen beschränkte Laser 11 stammt. Wenn der Laser den Werkstückträger demnach ohne den Spiegel 20 nur aus einem vorgegebenen Raumwinkelbereich direkt bestrahlen kann, kann er das zu fertigende Hörgerätebauteil bzw. den Werkstückträger 14 mit Hilfe des Spiegels 20 (sofern dieser geeignet platziert ist) auch aus einem Zusatzwinkelbereich bestrahlen, der außerhalb des vorgegebenen Raumwinkelbereichs liegt. Die indirekte Bestrahlung vergrößert somit den Einfallsbereich des Laserstrahls auf das Werkstück.

Der Spiegel 20 kann durch eine beliebige andere Optikeinrichtung ersetzt werden, die den Laserstrahl umlenkt. Beispielsweise kann es sich bei der Optikeinrichtung auch um eine Anordnung von mehreren Spiegeln handeln. Außerdem kann der oder die Spiegel auch dynamisch bewegt sein. Des Weiteren kann die Optikeinrichtung auch Elemente zur Lichtbrechung, wie z. B. ein Prisma, aufweisen.

Gemäß der vorliegenden Erfindung können somit Werkstückrohlinge mit Hinterschneidungen in die Rapid-Prototyping-Vorrichtung eingelegt und verarbeitet werden, die wegen ihrer Hinterschneidungen mit konventionellen Rapid-Prototyping-Vorrichtungen nicht bearbeitet werden könnten. In dem konkreten Beispiel kann nun auch nach dem automatischen Bestücken der Platte 15 mit der Komponente 16 Material auf der Platte 15 gegebenenfalls auch unter der Komponente 16 durch ein Rapid-Prototyping-Verfahren, wie z. B. Stereolithografie oder selektives Lasersintern, aufgebracht werden. Somit braucht nicht auf das automatische Bestücken der Platte 15 mit der Komponente 16 verzichtet zu werden.

## Patentansprüche

1. Rapid-Prototyping-Verfahren zum Herstellen eines Bauteils eines Hörgeräts durch
- Erzeugen eines Laserstrahls (12) mit dem Laser (11),
- Bereitstellen eines Werkstückträgers (14), der durch den Laser (11) direkt bestrahlbar ist, und
- Aushärten eines Werkstoffs auf dem Werkstückträger (14) mit dem Laserstrahl (12),
**gekennzeichnet durch**
- Umlenken des Laserstrahls (12), so dass der Werkstückträger mit dem Laser indirekt bestrahlt wird.

2. Rapid-Prototyping-Verfahren nach Anspruch 1, wobei der Laserstrahl (12) mittels eines Spiegels umgelenkt wird.

3. Rapid-Prototyping-Verfahren nach Anspruch 1 oder 2, das als Stereolithografieverfahren ausgeführt wird.

4. Rapid-Prototyping-Verfahren nach Anspruch 1 oder 2, das als selektives Lasersinterverfahren ausgeführt wird.

5. Rapid-Prototyping-Verfahren einem der Ansprüche 1 bis 4, wobei der Werkstückträger (14) einen Werkstückrohling (13) mit einer Hörgeräte-Komponente (16) trägt, unter der sich ein Hohlraum (17) befindet, in dem durch indirekte Bestrahlung (21) mit dem Laser (11) Material durch Aushärten des Werkstoffs aufgebaut wird.

6. R-P-V nach einem der vorhergehenden Ansprüche, wobei das Bauelement eine Schale eines IdO-Hörgeräts ist.
